# EUROPEAN PATENT SPECIFICATION

(11) **EP 3 798 025 B1**
(45) Date of publication and mention of the grant of the patent: **13.04.2022**
(21) Application number: 20196148.9
(22) Date of filing: 15.09.2020
(51) Int. Cl.: B60C 13/02, B29D 30/06, B60C 13/00

(54) **TIRE**
REIFEN
PNEUMATIQUE

(30) Priority: 30.09.2019 JP 2019180273
(43) Date of publication of application: 31.03.2021
(73) Proprietor: Sumitomo Rubber Industries, Ltd., Kobe-shi, Hyogo 651-0072 (JP)
(72) Inventor: ITO, Masaya, Kobe-shi, Hyogo 651-0072 (JP); UEDA, Kenji, Kobe-shi, Hyogo 651-0072 (JP); NAKAMURA, Masatomo, Kobe-shi, Hyogo 651-0072 (JP); HAYASHI, Koji, Kobe-shi, Hyogo 651-0072 (JP); OBA, Ryo, Kobe-shi, Hyogo 651-0072 (JP); TERASHIMA, Masaki, Kobe-shi, Hyogo 651-0072 (JP); NAGASE, Masahiro, Kobe-shi, Hyogo 651-0072 (JP); TATSUTA, Masahiro, Kobe-shi, Hyogo 651-0072 (JP); TAMAI, Junya, Kobe-shi, Hyogo 651-0072 (JP)
(74) Representative: Manitz Finsterwald Patent- und Rechtsanwaltspartnerschaft mbB

(56) References cited:
- WO-A1-2014/091911
- US-A- 5 769 976
- US-A1- 2019 176 524
- US-A1- 2019 210 312

## Description

### BACKGROUND OF THE INVENTION

### Field of the Invention

The present invention relates to a tire.

### Description of the Background Art

In recent years, as a means for improving the fuel economy performance of tires and further vehicles, attention has been paid to reduction of the air resistance of tires during running in addition to reduction of rolling resistance. A tire in which a turbulent flow prevention region is formed in each buttress portion so as to be connected to a tread portion without having a step, in order to reduce air resistance, has been proposed (see, for example, Japanese Patent No. 4295455).

Meanwhile, the shape of each buttress portion of a tire has been known to affect the ride comfort of the tire. However, in the tire disclosed in Japanese Patent No. 4295455, ride comfort is not sufficiently considered, leaving room for improvement.

WO2014/091911 A1 and US 5,769,976 A disclose tires having projections and recesses in the sidewall portions. A tire with a projection portion having a height of 0.3 mm in the sidewall portion is disclosed in US 2019/210312 A1.

The present invention has been made in view of the above circumstances, and a main object of the present invention is to provide a tire capable of reducing air resistance without sacrificing ride comfort.

### SUMMARY OF THE INVENTION

The present invention is directed to a tire including a tread portion and sidewall portions extending from both ends of the tread portion through buttress regions and maximum width positions to bead portions, wherein a projection portion extending in a tire circumferential direction and a recess portion extending in the tire circumferential direction are formed in each of the buttress regions, the projection portion has a projection height of 0.1 to 0.3 mm from a reference surface of the buttress region in the outward direction, and the recess portion has a recess depth of 0.1 to 0.3 mm from the reference surface in the inward direction.

In the tire according to the present invention, the projection portion is preferably continuous in the tire circumferential direction.

In the tire according to the present invention, the recess portion is preferably continuous in the tire circumferential direction.

In the tire according to the present invention, the projection portion preferably has an external corner portion that is continuous in the tire circumferential direction.

In the tire according to the present invention, a line is preferably formed at the external corner portion by a parting line between a tread mold for molding the tread portion and a side mold for molding the sidewall portion.

In the tire according to the present invention, preferably, the projection portion has a plurality of external corner portions that are continuous in the tire circumferential direction, and the line is formed at an external corner portion located at an outermost side in the tire radial direction, of the plurality of external corner portions.

In the tire according to the present invention, preferably, the projection portion includes a first projection portion and a second projection portion located inward of the first projection portion in the tire radial direction, and the recess portion is provided between the first projection portion and the second projection portion.

Preferably, the tire according to the present invention further includes: a carcass extending from the tread portion through the sidewall portions to the bead portions; and sidewall rubbers disposed outward of the carcass, and a thickness of the sidewall rubber in each buttress region is not greater than 2.5 mm.

In the tire according to the present invention, the thickness of the sidewall rubber in each buttress region is preferably not greater than 40% of a thickness of the sidewall rubber at the maximum width position.

In the tire according to the present invention, in each of the buttress regions, the projection portion and the recess portion extending in the tire circumferential direction are formed. The projection portion has the projection height of 0.1 to 0.3 mm from the reference surface of the buttress region toward the outer side in the tire radial direction, and the recess portion has the recess depth of 0.1 to 0.3 mm from the reference surface toward the inner side in the tire radial direction. Owing to the projection portion and the recess portion described above, the air resistance of the tire during running is reduced, and the fuel economy performance of the tire is improved. In addition, the recess portion serves as a bending point when the tire is bent due to application of a load to the tire, and ensures flexibility of the sidewall portion. Accordingly, the vertical spring constant of the tire is decreased, and the ride comfort of the tire is improved.

### BRIEF DESCRIPTION OF THE DRAWINGS

FIG. 1 is a cross-sectional view of an embodiment of the tire according to the present invention;
FIG. 2 is an enlarged view of a buttress portion in FIG. 1;
FIG. 3 is an enlarged view showing the buttress portion in FIG. 1 together with a mold;
FIG. 4 is a further enlarged view of the buttress portion in FIG. 2;
FIG. 5 is a further enlarged view of the buttress portion in FIG. 2;
FIG. 6(a) is a partial side view schematically showing airflow around a tire during running; and
FIG. 6(b) is a cross-sectional view taken along a line A-A in FIG. 6(a).

### DESCRIPTION OF THE PREFERRED EMBODIMENTS

Hereinafter, an embodiment of the present invention will be described with reference to the drawings.

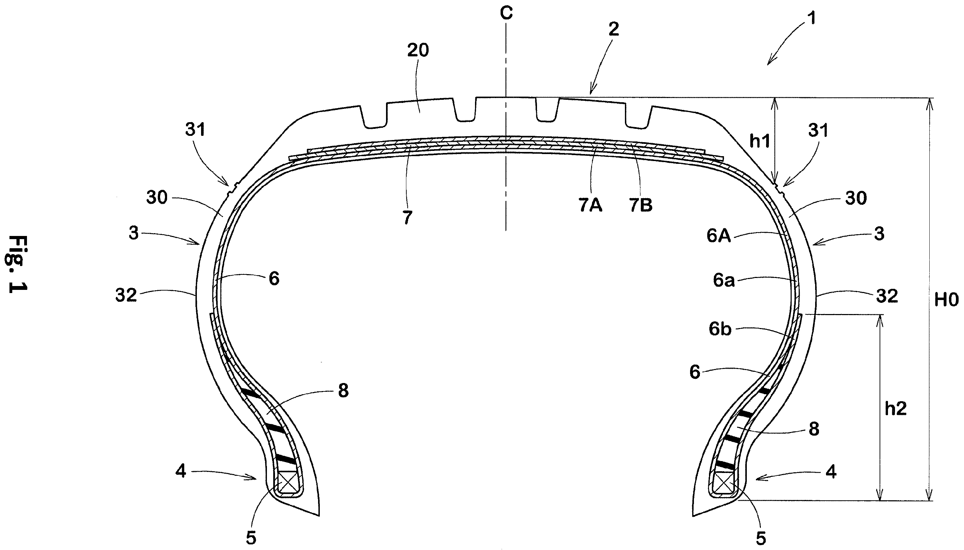

FIG. 1 is a meridian cross-sectional view of a tire 1 according to the present embodiment. The tire 1 according to the present embodiment includes a tread portion 2 and sidewall portions 3 extending from both ends of the tread portion 2 through buttress regions 31 and maximum width positions 32 to bead portions 4.

In the tire 1 according to the present embodiment, a carcass 6 extends on and between the bead portions 4, 4, and a belt layer 7 is disposed within the tread portion 2 outward of the carcass 6.

The carcass 6 is composed of one or more carcass plies, one carcass ply 6A in this example, in which carcass cords are arranged, for example, at an angle of 75° to 90° relative to the tire circumferential direction. The carcass ply 6A has a main body portion 6a extending between the bead portions 4, 4, and turned-up portions 6b turned up around bead cores 5 of the bead portions 4 from the inner side to the outer side to be engaged at both ends of the main body portion 6a. A bead apex rubber 8 for reinforcing a bead portion is disposed between the main body portion 6a and each turned-up portion 6b so as to extend from the bead core 5 outwardly in the tire radial direction in a tapered shape.

The belt layer 7 is composed of two or more belt plies, two belt plies 7A and 7B in this example, in which belt cords are arranged, for example, at an angle of 15° to 45° relative to the tire circumferential direction. The cords of the respective plies intersect each other, thereby reinforcing the tread portion 2 with high stiffness. For the purpose of improving highspeed durability and steering stability, a band layer composed of a band ply obtained by spirally winding a band cord in the circumferential direction can be provided outward of the belt layer 7.

A tread rubber 20 is disposed outward of the belt layer 7. In addition, in each sidewall portion 3, a sidewall rubber 30 is disposed outward of the carcass 6.

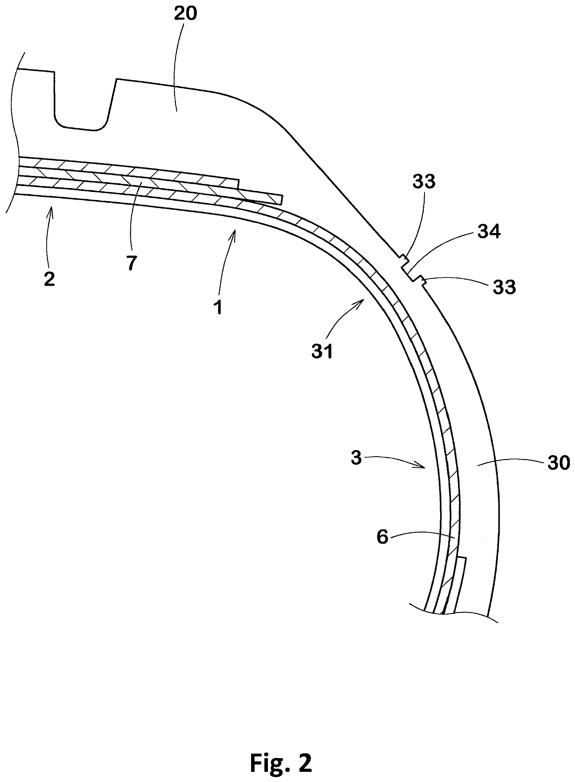

FIG. 2 shows the buttress region 31 of the tire 1 in an enlarged manner. In the buttress region 31, a projection portion 33 is formed so as to project in the outward direction of the sidewall portion 3 and extend in the tire circumferential direction, and a recess portion 34 is formed so as to be recessed in the inward direction of the sidewall portion 3 and extend in the tire circumferential direction. The recess portion 34 is formed along the projection portion 33.

The projection height of the projection portion 33 and the recess depth of the recess portion 34 are optimized as described later. Accordingly, turbulence of airflow, that is, separation of airflow, around the buttress region 31 is inhibited. Therefore, the air resistance of the tire 1 during running is reduced, and the fuel economy performance of the tire 1 is improved.

In the present embodiment, the recess portion 34 having low stiffness is formed adjacent to the projection portion 33 having high bending stiffness. Such a recess portion 34 serves as a bending point when the tire 1 is bent due to application of a load to the tire 1, and ensures flexibility of the sidewall portion 3. Accordingly, the vertical spring constant of the tire 1 is reduced, and the ride comfort of the tire 1 is improved.

The projection portion 33 is continuously formed in the tire circumferential direction. The recess portion 34 is also continuously formed in the tire circumferential direction. Owing to such a projection portion 33 and such a recess portion 34, the air resistance of the tire 1 during running is continuously reduced, and the ride comfort of the tire 1 is continuously improved.

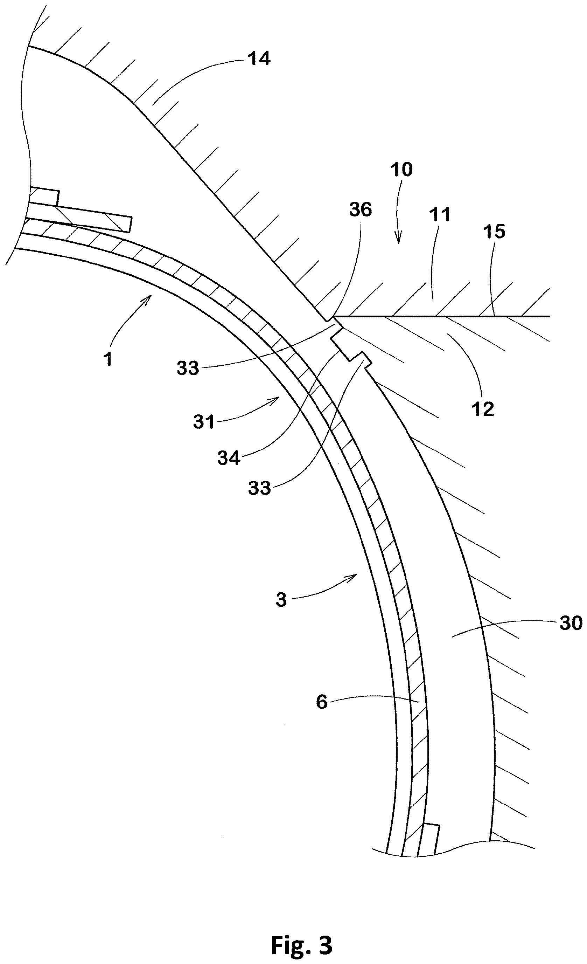

FIG. 3 shows the buttress region 31 in an enlarged manner together with a mold 10 for vulcanizing and molding the tire 1.

The mold 10 includes a tread mold 11 for vulcanizing and molding the tread portion 2, and side molds 12 for vulcanizing and molding the sidewall portions 3. The tread mold 11 is divided into a plurality of segments 14 in the circumferential direction. Each side mold 12 is movable in the tire axial direction, and each segment 14 is movable in the tire radial direction. FIG. 3 shows a state where the side mold 12 has moved inwardly in the tire axial direction and each segment 14 has moved inwardly in the tire radial direction to cause mold closing.

The tread mold 11 and each side mold 12 abut at the buttress region 31 to cause mold closing. Therefore, on the tire molded surface of the buttress region 31, a line 36 is continuously formed in the tire circumferential direction by a parting line 15 between the tread mold 11 and the side mold 12. The line 36 is a trace of the sidewall rubber 30 protruding at the parting line 15 during vulcanization and molding.

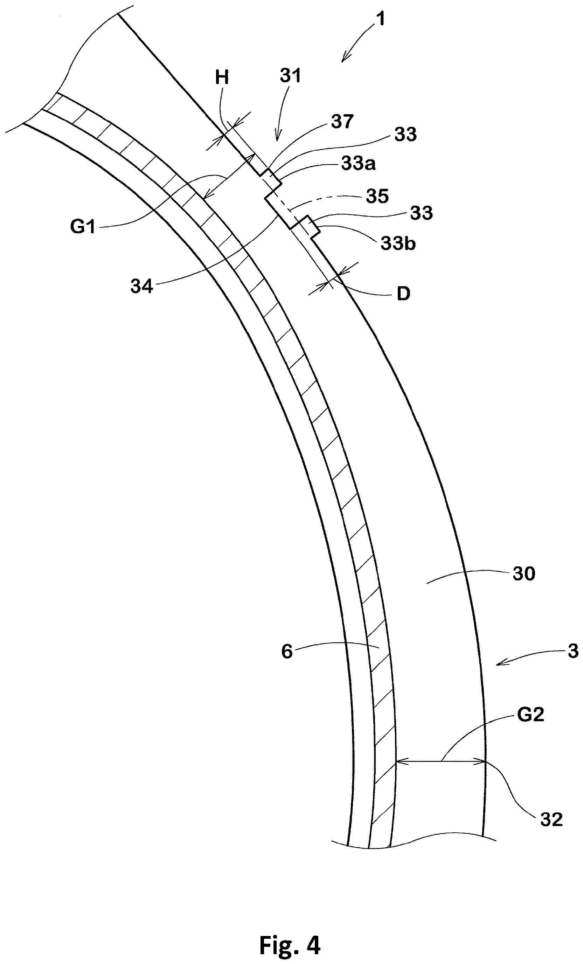

The projection portion 33 has an external corner portion 37 (see FIG. 4 described later) that is continuous in the tire circumferential direction. In the mold 10 according to the present embodiment, at the external corner portion 37, the tread mold 11 and the side mold 12 are separated and joined by mold closing. Therefore, the line 36 is formed at the external corner portion 37 of the tire 1 that is vulcanized and molded using the mold 10.

FIG. 4 shows the buttress region 31 in a further enlarged manner. The projection portion 33 has a protruding height H of 0.1 to 0.3 mm outwardly from a reference surface 35 of the buttress region 31. As used herein, the "reference surface 35 of the buttress region 31" is a smooth contour surface of the buttress region 31 when the projection portion 33 and the recess portion 34 are not provided. Where projection portion 33 and the recess portion 34 are provided, the reference surface 35 is an imaginary contour surface that connects smoothly between the contour surface on the tread portion 2 side and the contour surface on the maximum width position 32 side. As used herein, the above-mentioned "smoothly connects" means that the imaginary contour surface is drawn such that a thickness of the sidewall rubber 30 (or a distance from the carcass 6) is constant.

When the projection height H of the projection portion 33 is not less than 0.1 mm, protrusion of the sidewall rubber 30 from the parting line 15 between the tread mold 11 and the side mold 12 is inhibited. On the other hand, when the projection height H of the projection portion 33 is not greater than 0.3 mm, turbulence of airflow around the buttress region 31 is inhibited, and the air resistance of the tire 1 during running is reduced.

The recess portion 34 has a recess depth D of 0.1 to 0.3 mm inwardly from the reference surface 35.

When the recess depth D of the recess portion 34 is not less than 0.1 mm, favorable bending is achieved at the recess portion 34, and the ride comfort is improved. On the other hand, when the recess depth D of the recess portion 34 is not greater than 0.3 mm, in cooperation with the projection portion 33 having the projection height H, turbulence of airflow around the buttress region 31 is inhibited, and the air resistance of the tire 1 during running is reduced.

In the tire 1, a plurality of (two in the present embodiment) projection portions 33 are provided in the buttress region 31. That is, in the buttress region 31, a first projection portion 33a and a second projection portion 33b located inward of the first projection portion 33a in the tire radial direction are formed.

The projection height H of the first projection portion 33a and the projection height H of the second projection portion 33b may be equal or may be different from each other. In addition, the projection height H of each projection portion and the recess depth D of the recess portion 34 may be equal or may be different from each other.

In the tire 1 according to the present embodiment, the first projection portion 33a has external corner portions at the outer side and the inner side thereof in the tire radial direction. Similarly, the second projection portion 33b has external corner portions at the outer side and the inner side thereof in the tire radial direction.

The parting line 15 between the tread mold 11 and the side mold 12 is formed at the external corner portion 37 located at the outermost side in the tire radial direction, of a plurality of external corner portions (in FIG. 3, only the external corner portion located at the outermost side in the tire radial direction is designated by the reference character). Therefore, the line 36 is formed at the external corner portion 37 located at the outermost side in the tire radial direction. The location of the parting line 15 allows the tread mold 11 to be easily produced. The parting line 15 is not limited to be located at the external corner portion 37 located at the outermost side in the tire radial direction, and may be located at another external corner portion.

The recess portion 34 of the present embodiment is provided between the first projection portion 33a and the second projection portion 33b. Owing to such arrangement, the difference between high stiffness and low stiffness in the stiffness distribution in the buttress region 31 becomes large, so that the recess portion 34 can easily serve as a starting point of bending. Accordingly, good ride comfort is easily achieved.

A thickness G1 of the sidewall rubber 30 in the buttress region 31 is preferably not greater than 2.5 mm. When the thickness G1 is not greater than 2.5 mm, the recess portion 34 easily serves as a starting point of bending, and good ride comfort is achieved.

The thickness G1 is preferably not less than 1.5 mm. When the thickness G1 is not less than 1.5 mm, sufficient lateral stiffness of the sidewall portion 3 is ensured, and good steering stability is achieved.

The recess portion 34 forms a thinnest region of the sidewall portion 3. The thickness G1 of the sidewall rubber 30 in the buttress region 31 is preferably not greater than 40% of a thickness G2 of the sidewall rubber 30 at the maximum width position 32. When the thickness G1 is not greater than 40% of the thickness G2, the recess portion 34 easily serves as a starting point of bending, and good ride comfort is achieved.

The thickness G1 is preferably not less than 25% of the thickness G2. When the thickness G1 is not less than 25% of the thickness G2, sufficient lateral stiffness of the sidewall portion 3 is ensured, and good steering stability is achieved.

As shown in FIG. 1, a distance h1 of the projection portion 33 in the tire radial direction from the equatorial point of the tire 1 is preferably 20 to 26% of a tire cross-sectional height H0. When the distance h1 is not less than 20% of the height H0, air resistance at the sidewall portion 3 is reduced. When the distance h1 is not greater than 26% of the height H0, the tread mold 11 can be easily produced.

A turned-up height h2 of each turned-up portion 6b from a bead base line is preferably 17 to 115 mm. When the turned-up height h2 is not less than 17 mm, sufficient lateral stiffness of the sidewall portion 3 is ensured, and good steering stability is achieved. When the turned-up height h2 is not greater than 115 mm, good ride comfort is achieved.

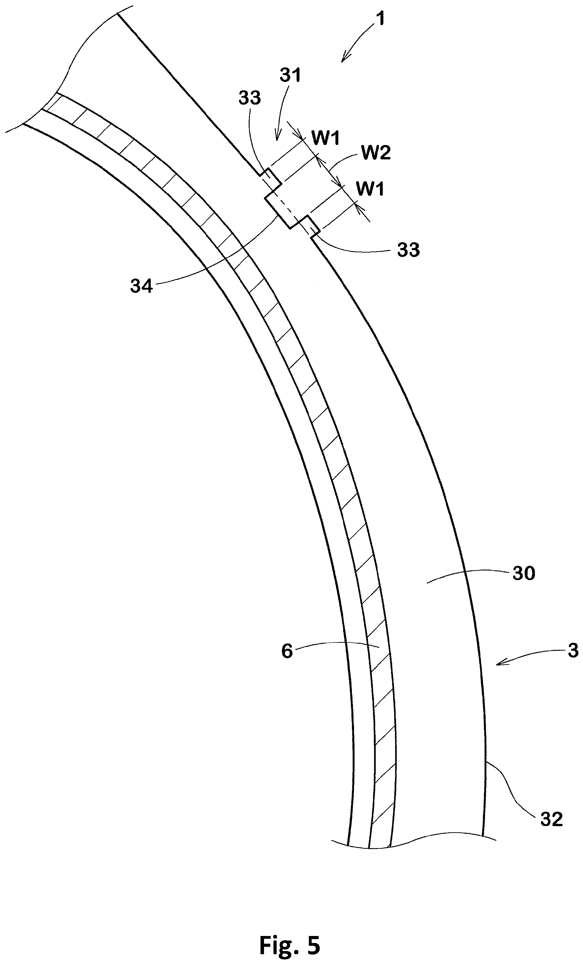

As shown in FIG. 5, a width W1 of each projection portion 33 is preferably 3 to 5 mm. When the width W1 is not less than 3 mm, small turbulent flow occurs around the projection portion 33, and the air resistance of the tire 1 as a whole is reduced. When the width W1 is not greater than 5 mm, the recess portion 34 easily serves as a bending point, and the ride comfort is improved.

A width W2 of the recess portion 34 is preferably 3 to 5 mm. When the width W2 is not less than 3 mm, small turbulent flow occurs around the recess portion 34, and the air resistance of the tire 1 as a whole is reduced. When the width W2 is not greater than 5 mm, the recess portion 34 easily serves as a bending point, and the ride comfort is improved.

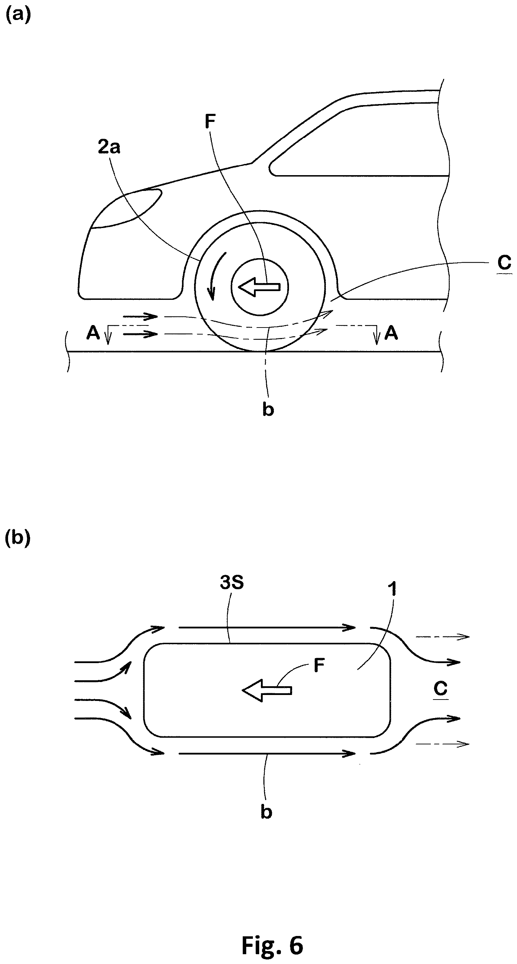

FIGS. 6(a) and 6(b) schematically show airflow around the tire during running. During running, the air hitting a tread surface 2a from the front side in a traveling direction F branches to both sides of the tire axial direction to form airflow b to the rear side along a surface 3S of the side wall portion 3. At this time, in the case where the projection portion 33 and the recess portion 34 are provided on the surface 3S of each sidewall portion 3, the air is entrained by the projection portion 33 and the recess portion 34, and an effect of inhibiting separation of the air from the surface 3S is produced. The air that is inhibited from being separated can pass through the tread end and flow around to the tread surface 2a side to increase the pressure at a tire rear portion C, resulting in reduction in pressure resistance, etc., thereby reducing the air resistance.

Here, at each sidewall portion 3, the rotation speed is faster at the outer side in the tire radial direction, and the air is easily separated. However, in the tire 1, since the projection portion 33 and the recess portion 34 are provided in the buttress region 31 located at the outer side in the tire radial direction, separation of the air can be delayed, and the separation position can be moved to the rear side. Therefore, an effect of causing the air to flow around to the tread surface 2a side is enhanced, and the pressure at the tire rear portion C is increased, so that it is possible to more effectively reduce the air resistance.

Although the tire 1 according to the present invention has been described in detail above, the present invention is not limited to the above specific embodiment, and various modifications can be made to implement the present invention as defined in the appended claims.

### EXAMPLES

Pneumatic tires having the basic structure in FIG. 1 with a size of 195/65R15 were produced as test tires on the basis of specifications in Table 1. The produced test tires were used to evaluate an amount of burrs generated, air resistance, a vertical spring constant, and ride comfort. The respective test methods are as follows.

### <Amount of Burrs Generated>

The amount of rubber protruding to the gap between a tread mold and a sidewall mold in each buttress region was visually confirmed. A lower value indicates that the generated burrs are smaller and the appearance is better.

### <Air Resistance>

Each tire fitted to a rim having a size of 15×6.0 J and inflated to an internal pressure of 230 kPa was rotated on a drum tester at a rotation speed equivalent to a running speed of 100 km/h, and wind corresponding to the running speed was sent to the front of the tire. In addition, the air resistance acting on the tire at this time was measured. The air resistance was calculated by subtracting the rolling resistance from the resistance acting on the tire. The result is an index with the value of Comparative Example 2 being regarded as 100. A lower value indicates that the air resistance is lower and the fuel economy performance is better.

### <Vertical Spring Constant>

Each of the above tires was fitted to the above rim and brought into contact with a flat surface under conditions of an internal pressure of 230 kPa and a load of 4.82 kN, and the amount of vertical bending of the tire was measured. Then, a vertical spring constant was approximately obtained by dividing the load of 4.82 kN by the amount of vertical bending. The result is indicated as an index with the value of Comparative Example 2 being regarded as 100. A lower value indicates that the vertical spring is lower, which is more advantageous for ride comfort.

### <Ride Comfort>

Each of the above tires was fitted to the above rim, inflated to an internal pressure of 230 kPa, and mounted to each wheel of a front wheel drive vehicle produced in Japan. A driver drove the vehicle on a test course, and made overall evaluation of lumpy feeling, push-up, and damping through sensory evaluation. The result is indicated as a score with the score of Comparative Example 2 being regarded as 6.0. A higher value indicates a better result.

### The results of the tests are shown in Table 1.

**[Table 1]**

| | Comparat Example 1 tive 1 | | Comp Exam arative ple 2 | | Ex ample 1 | | Ex ample 2 | | Ex ample 3 | |
|---|---|---|---|---|---|---|---|---|---|---|
| Projection height H (mm) | 0.05 | | 0. 40 | | 0. 10 | | 0.10 | | 0. 10 | |
| Recess depth D (mm) | 0.05 | | 0.40 40 | | 0. 10 | | 0.10 | | 0. 10 | |
| Rubber thickness G1 (mm) | 3.0 | | 3 .0 | | 3.0 | | 2.5 | | 1.5 | |
| Rubber thickness G2 (mm) | 6.0 | | 6 .0 | | 6.0 | | 6.0 | | 6.0 | |
| Ratio G1/G2 (%) | 50.0 | | 50.0 .0 | | 5 50.0 | | 41.7 | | 25. 0 | |
| Amount of burrs generated (mm) | 4.0 | | 1 .0 | | 2.0 | | 2.0 | | 2.0 | |
| Air resistance (index) | 98 | | 1 00 | | 98 | | 98 | | 98 | |
| Vertical spring constant Ky (index) | 100 | | 1 00 | | 1 100 | | 99 | | 98 | |
| Ride comfort (score) | 6.0 | | 6 .0 | | 6.0 | | 6.5 | | 7.0 | |
| | | | | | | | | | | |

| | Example 4 | Ex ample 5 | | Exam 6 ple | | Exam 7 ple | | Examp 8 le | | Example 9 |
|---|---|---|---|---|---|---|---|---|---|---|
| Projection height H (mm) | 0.20 | 0.20 | | 0.2 0 | | 0.3 0.30 | | 0.30 | | 0.30 |
| Recess depth D (mm) | 0.20 | 0.20 | | 0.2 0 | | 0.3 0.30 | | 0.30 | | 0.30 |
| Rubber thickness G1 (mm) | 3.0 | 2.5 | | 1.5 | | 3.0 | | 2.5 | | 3.0 |
| Rubber thickness G2 (mm) | 6.0 | 6.0 | | 6.0 | | 6.0 | | 6.0 | | 6.0 |
| Ratio G1/G2 (%) | 50.0 | 4 41.7 | | 25. 0 | | 50.0 | | 41.7 | | 50.0 |
| Amount of burrs generated (mm) | 1.5 | 1.5 | | 1.5 | | 1.0 | | 1.0 | | 1.0 |
| Air resistance (index) | 99 | 99 | | 99 | | 99 | | 99 | | 99 |
| Vertical spring constant Ky (index) | 100 | 99 | | 98 | | 100 | | 99 | | 98 |
| Ride comfort (score) | 6.0 | 6.5 | | 7.0 | | 6.0 | | 6.5 | | 7.0 |

As is obvious from Table 1, it was confirmed that the tire of each Example has a significantly small amount of burrs generated as compared to that in each Comparative Example and thus can reduce air resistance without sacrificing ride comfort.

## Claims

1. A tire (1) comprising a tread portion (2) and sidewall portions (3) extending from both ends of the tread portion (2) through buttress regions (31) and maximum width positions (32) to bead portions (4), wherein
a projection portion (33) extending in a tire circumferential direction and a recess portion (34) extending in the tire circumferential direction are formed in each of the buttress regions (31), **characterised in that**
the projection portion (33) has a projection height (H) of 0.1 to 0.3 mm from a reference surface (35) of the buttress region (31) in the outward direction, and
the recess portion (34) has a recess depth (D) of 0.1 to 0.3 mm from the reference surface (35) in the inward direction.

2. The tire (1) according to claim 1, wherein the projection portion (33) is continuous in the tire circumferential direction.

3. The tire (1) according to claim 1 or 2, wherein the recess portion (34) is continuous in the tire circumferential direction.

4. The tire (1) according to claim 2, wherein the projection portion (33) has an external corner portion (37) that is continuous in the tire circumferential direction.

5. The tire (1) according to claim 4, wherein a line (36) is formed at the external corner portion (37) by a parting line (15) between a tread mold for molding the tread portion (2) and a side mold for molding the sidewall portion (3).

6. The tire (1) according to claim 5, wherein
the projection portion (33) has a plurality of external corner portions that are continuous in the tire circumferential direction, and
the line (36) is formed at an external corner portion (37) located at an outermost side in the tire radial direction, of the plurality of external corner portions.

7. The tire (1) according to any one of claims 1 to 6, wherein
the projection portion (33) includes a first projection portion (33a) and a second projection portion (33b) located inward of the first projection portion (33a) in the tire radial direction, and
the recess portion (34) is provided between the first projection portion (33a) and the second projection portion (33b).

8. The tire (1) according to any one of claims 1 to 7, further comprising: a carcass (6) extending from the tread portion (2) through the sidewall portions (3) to the bead portions (4); and sidewall rubbers (30) disposed outward of the carcass (6), wherein
a thickness (G1) of the sidewall rubber (30) in each buttress region (31) is not greater than 2.5 mm.

9. The tire according to claim 8, wherein
the thickness (G1) of the sidewall rubber (30) in each buttress region (31) is not less than 1.5 mm.

10. The tire (1) according to claim 8, wherein the thickness (G1) of the sidewall rubber (30) in each buttress region (31) is not greater than 40% of a thickness (G2) of the sidewall rubber (30) at the maximum width position (32).

11. The tire according to claim 10, wherein the thickness (G1) of the sidewall rubber (30) in each buttress region (31) is not less than 25% of a thickness (G2) of the sidewall rubber (30) at the maximum width position (32).

12. The tire (1) according to any one of claims 1 to 7, wherein
a distance (h1) of the projection portion (33) in the tire radial direction from the equatorial point of the tire (1) is 20 to 26% of a tire cross-sectional height (H0).

13. The tire according to claim 1, wherein
a turned-up height (h2) of a turned-up portion (6b) from a bead base line is 17 to 115 mm.

14. The tire according to claim 1, wherein
a width (W1) of the projection portion (33) is 3 to 5 mm.

15. The tire according to claim 1, wherein
a width (W2) of the recess portion (34) is 3 to 5 mm.

## Patentansprüche

1. Reifen (1), der einen Laufflächenabschnitt (2) und Seitenwandabschnitte (3) umfasst, die sich von beiden Enden des Laufflächenabschnitts (2) durch Stützbereiche (31) und Positionen maximaler Breite (32) zu Wulstabschnitten (4) erstrecken, wobei
ein Vorsprungabschnitt (33), der sich in einer Reifenumfangsrichtung erstreckt, und ein Rücksprungabschnitt (34), der sich in der Reifenumfangsrichtung erstreckt, in jedem der Stützbereiche (31) ausgebildet sind,
**dadurch gekennzeichnet, dass**
der Vorsprungabschnitt (33) eine Vorsprunghöhe (H) von 0,1 bis 0,3 mm von einer Bezugsfläche (35) des Stützbereichs (31) in der Richtung nach außen aufweist, und
der Rücksprungabschnitt (34) eine Rücksprungtiefe (D) von 0,1 bis 0,3 mm von der Bezugsfläche (35) in Richtung nach innen aufweist.

2. Reifen (1) nach Anspruch 1, wobei der Vorsprungabschnitt (33) in der Reifenumfangsrichtung durchgehend ist.

3. Reifen (1) nach Anspruch 1 oder 2, wobei der Rücksprungabschnitt (34) in der Reifenumfangsrichtung durchgehend ist.

4. Reifen (1) nach Anspruch 2, wobei der Vorsprungabschnitt (33) einen Außeneckenabschnitt (37) aufweist, der in der Reifenumfangsrichtung durchgehend ist.

5. Reifen (1) nach Anspruch 4, wobei eine Linie (36) an dem Außeneckenabschnitt (37) durch eine Trennlinie (15) zwischen einer Laufflächenform zum Formen des Laufflächenabschnitts (2) und einer Seitenform zum Formen des Seitenwandabschnitts (3) gebildet wird.

6. Reifen (1) nach Anspruch 5, wobei
der Vorsprungabschnitt (33) eine Vielzahl von Außeneckenabschnitten aufweist, die in der Reifenumfangsrichtung durchgehend sind, und
die Linie (36) an einem Außeneckenabschnitt (37) gebildet wird, der sich an einer am weitesten außen liegenden Seite in der radialen Richtung des Reifens der Vielzahl von Außeneckenabschnitten befindet.

7. Reifen (1) nach einem der Ansprüche 1 bis 6, wobei
der Vorsprungabschnitt (33) einen ersten Vorsprungabschnitt (33a) und einen zweiten Vorsprungabschnitt (33b) aufweist, der in der radialen Richtung des Reifens innen von dem ersten Vorsprungabschnitt (33a) angeordnet ist, und
der Rücksprungabschnitt (34) zwischen dem ersten Vorsprungabschnitt (33a) und dem zweiten Vorsprungabschnitt (33b) vorgesehen ist.

8. Reifen (1) nach einem der Ansprüche 1 bis 7, ferner umfassend:
eine Karkasse (6), die sich von dem Laufflächenabschnitt (2) durch die Seitenwandabschnitte (3) zu den Wulstabschnitten (4) erstreckt; und Seitenwandgummis (30), die außen von der Karkasse (6) angeordnet sind, wobei
eine Dicke (G1) des Seitenwandgummis (30) in jedem Stützbereich (31) nicht größer als 2,5 mm ist.

9. Reifen nach Anspruch 8, wobei die Dicke (G1) des Seitenwandgummis (30) in jedem Stützbereich (31) nicht kleiner als 1,5 mm ist.

10. Reifen (1) nach Anspruch 8, wobei die Dicke (G1) des Seitenwandgummis (30) in jedem Stützbereich (31) nicht größer als 40 % einer Dicke (G2) des Seitenwandgummis (30) an der Position maximaler Breite (32) ist.

11. Reifen nach Anspruch 10, wobei die Dicke (G1) des Seitenwandgummis (30) in jedem Stützbereich (31) nicht kleiner als 25 % einer Dicke (G2) des Seitenwandgummis (30) an der Position maximaler Breite (32) ist.

12. Reifen (1) nach einem der Ansprüche 1 bis 7, wobei ein Abstand (h1) des Vorsprungabschnitts (33) in der radialen Richtung des Reifens von einem Äquatorialpunkt des Reifens (1) 20 bis 26 % einer Reifenquerschnittshöhe (H0) beträgt.

13. Reifen nach Anspruch 1, wobei eine Umschlagshöhe (h2) eines Vorsprungabschnitt (6b) von einer Wulstgrundlinie 17 bis 115 mm beträgt.

14. Reifen nach Anspruch 1, wobei die Breite (W1) des vorstehenden Teils (33) 3 bis 5 mm beträgt.

15. Reifen nach Anspruch 1, wobei eine Breite (W2) des Rücksprungabschnitts (34) 3 bis 5 mm beträgt.

## Revendications

1. Pneumatique (1) comprenant une portion formant bande de roulement (2) et des portions formant parois latérales (3) s'étendant depuis les deux extrémités de la portion formant bande de roulement (2) à travers des régions de contrefort (31) et des positions de largeur maximum (32) jusqu'à des portions de talon (4), dans lequel
une portion en projection (33) s'étendant dans une direction circonférentielle du pneumatique et une portion d'évidement (34) s'étendant dans la direction circonférentielle du pneumatique sont formées dans chacune des régions de contrefort (31),
**caractérisé en ce que**
la portion en projection (33) a une hauteur de projection (H) de 0,1 à 0,3 mm depuis une surface de référence (35) de la région de contrefort (31) dans la direction vers l'extérieur, et
la portion d'évidement (34) a une profondeur d'évidement (D) de 0,1 à 0,3 mm depuis la surface de référence (35) dans la direction vers l'intérieur.

2. Pneumatique (1) selon la revendication 1, dans lequel la portion en projection (33) est continue dans la direction circonférentielle du pneumatique.

3. Pneumatique (1) selon la revendication 1 ou 2, dans lequel la portion d'évidement (34) est continue dans la direction circonférentielle du pneumatique.

4. Pneumatique (1) selon la revendication 2, dans lequel la portion en projection (33) a un portion de coin externe (37) qui est continue dans la direction circonférentielle du pneumatique.

5. Pneumatique (1) selon la revendication 4, dans lequel une ligne (36) est formée au niveau de la portion de coin externe (37) par une ligne de séparation (15) entre un moule de bande de roulement destiné à mouler la portion formant bande de roulement (2) et un moule latéral destiné à mouler la portion formant paroi latérale (3).

6. Pneumatique (1) selon la revendication 5, dans lequel
la portion en projection (33) a une pluralité de portions de coins externes qui sont continues dans la direction circonférentielle du pneumatique, et
la ligne (36) est formée au niveau d'une portion de coin externe (37) située au niveau d'un côté le plus extérieur dans la direction radiale du pneumatique parmi la pluralité de portions de coins externes.

7. Pneumatique (1) selon l'une quelconque des revendications 1 à 6, dans lequel
la portion en projection (33) inclut une première portion en projection (33a) et une seconde portion en projection (33b) située à l'intérieur de la première portion en projection (33a) dans la direction radiale du pneumatique, et
la portion d'évidement (34) est prévue entre la première portion en projection (33a) et la seconde portion en projection (33b).

8. Pneumatique (1) selon l'une quelconque des revendications 1 à 7, comprenant en outre : une carcasse (6) s'étendant depuis la portion formant bande de roulement (2) à travers les portions formant parois latérales (3) jusqu'aux portions de talon (4) ; et des caoutchoucs de parois latérales (30) disposés à l'extérieur de la carcasse (6), dans lequel
une épaisseur (G1) du caoutchouc de paroi latérale (30) dans chaque région de contrefort (31) n'est pas supérieure à 2,5 mm.

9. Pneumatique selon la revendication 8, dans lequel
l'épaisseur (G1) du caoutchouc de paroi latérale (30) dans chaque région de contrefort (31) n'est pas inférieure à 1,5 mm.

10. Pneumatique (1) selon la revendication 8, dans lequel l'épaisseur (G1) du caoutchouc de paroi latérale (30) dans chaque région de contrefort (31) n'est pas supérieure à 40 % d'une épaisseur (G2) du caoutchouc de paroi latérale (30) à la position de largeur maximum (32).

11. Pneumatique selon la revendication 10, dans lequel l'épaisseur (G1) du caoutchouc de paroi latérale (30) dans chaque région de contrefort (31) n'est pas inférieure à 25 % d'une épaisseur (G2) du caoutchouc de paroi latérale (30) à la position de largeur maximum (32).

12. Pneumatique (1) selon l'une quelconque des revendications 1 à 7, dans lequel
une distance (h1) de la portion en projection (33) dans la direction radiale du pneumatique depuis le point équatorial du pneumatique (1) est de 20 à 26 % d'une hauteur de section transversale du pneumatique (H0).

13. Pneumatique selon la revendication 1, dans lequel
une hauteur retroussée (h2) d'une portion retroussée (6b) depuis une ligne de base de talon est de 17 à 115 mm.

14. Pneumatique selon la revendication 1, dans lequel
une largeur (W1) de la portion en projection (33) est de 3 à 5 mm.

15. Pneumatique selon la revendication 1, dans lequel
une largeur (W2) de la portion d'évidement (34) est de 3 à 5 mm.
